# EUROPÄISCHE PATENTANMELDUNG

(11) **EP 0 849 695 A2**
(43) Veröffentlichungstag der Anmeldung: **24.06.1998**
(21) Anmeldenummer: 97120834.3
(22) Anmeldetag: 27.11.1997
(51) Int. Cl.: G06K 7/00

(54) **Kartenträgerteil**

(30) Priorität: 20.12.1996 DE 19653597
(71) Anmelder: SIEMENS AKTIENGESELLSCHAFT, 80333 München (DE)
(72) Erfinder: Hoolhorst, Albert, 4527 BE Aardenburg (NL)

(57) **Zusammenfassung**

Es wird ein Kartenträgerteil beschrieben, welches zusammen mit einer zu lesenden Karte (1) in ein Kontaktträgerteil (3) einer Kartenlesevorrichtung einführbar ist. Das beschriebene Kartenträgerteil (2) zeichnet sich dadurch aus, daß es derart ausgebildet ist, daß es auf einen Randabschnitt der Karte unter Einklemmen desselben aufsteckbar ist. Dadurch können sowohl die Größe des Kartenträgerteils als auch die Größe der ein derartiges Kartenträgerteil verwendenden Kartenlesevorrichtung auf ein Minimum reduziert werden.

## Beschreibung

Die vorliegende Erfindung betrifft ein Kartenträgerteil gemäß dem Oberbegriff des Patentanspruchs 1, d.h. ein Kartenträgerteil, welches zusammen mit einer zu lesenden Karte in ein Kontaktträgerteil einer Kartenlesevorrichtung einführbar ist.

Kartenlesevorrichtungen, bei welchen derartige Kartenträgerteile einsetzbar sind, sind beispielsweise (aber bei weitem nicht ausschließlich) die in Mobiltelefonen vorgesehenen Lesevorrichtungen zum Entgegennehmen und/oder Weitergeben von durch eine oder für eine Chipkarte oder eine SIM-Karte bereitgestellten Informationen.

Chipkarten und SIM-Karten werden in Mobiltelefonen vor allem zur Teilnehmeridentifizierung eingesetzt; der Aufbau und die Funktion von Chipkarten und SIM-Karten sind allgemein bekannt und bedürfen keiner näheren Erläuterung.

Wenn in Mobiltelefonen (oder auch in anderen Geräten) vorgesehene Kartenlesevorrichtungen ein Kartenträgerteil aufweisen, welches zusammen mit einer Chipkarte oder einer SIM-Karte in ein die elektrischen Kontakte zum Kontaktieren der Chipkarte oder SIM-Karte enthaltendes Kontaktträgerteil der Kartenlesevorrichtung einführbar ist, so ist dieses Kartenträgerteil nach Art einer Schublade oder eines Schiebers ausgebildet, welche bzw. welcher (mit oder ohne eine darauf aufgelegte und nach Möglichkeit unverrückbar gehaltene Chipkarte oder SIM-Karte in einen Schacht des Kontaktträgerteils einschiebbar ist.

Kartenlesevorrichtungen dieser Art sind erkennbar nicht auf die Verwendung für Chipkarten und SIM-Karten beschränkt, sondern können grundsätzlich auch zum Lesen beliebiger anderer Karten verwendet werden.

Dies gilt unter anderem auch für die sogenannten MM-Karten, an welchen gerade gearbeitet wird und welche schon in naher Zukunft als Speichermedien, genauer gesagt als Massenspeicher in Halbleitertechnologie in den unterschiedlichsten elektronischen Geräten Einzug finden werden. "MM" ist die Abkürzung für "multi media" und ist Ausdruck der vielfältigen Einsatzmöglichkeiten von MM-Karten. MM-Karten weisen derzeit eine Speicherkapazität von 64 MBit auf. Es werden aber bereits jetzt Speicherkapazitäten bis in den GBit-Bereich als realistisch angesehen.

Aufgrund der geringen Größe der MM-Karten (bei den meisten MM-Karten liegt die Größe derzeit zwischen der von SIM-Karten und der von Chipkarten) und ferner aufgrund der Tatsache, daß die Lesevorrichtungen für derartige Karten ebenfalls sehr klein sein können (es müssen keine Motoren, bewegbaren Leseköpfe oder dergleichen vorgesehen werden), kommt der Einsatz derartiger MM-Karten auch für Mobiltelefone in Frage. In Mobiltelefonen können die MM-Karten beispielsweise zur Speicherung von Telefonbüchern, Sprache (Anrufbeantworterfunktion), Fax-Nachrichten, Software und dergleichen eingesetzt werden.

Allerdings steht in Mobiltelefonen und auch in vielen anderen Geräten, in welchem MM-Karten zum Einsatz kommen können, nur ein sehr beschränkter Platz für den Einbau von zusätzlichen Kartenlesevorrichtungen zur Verfügung. Erschwerend kommt hinzu, daß die zu lesenden Karten schnell und einfach wechselbar sein müssen und daß die Kartenlesevorrichtung vorzugsweise zur gleichzeitigen Aufnahme mehrerer Karten ausgelegt ist.

Die Größe von Kartenträgerteile gemäß dem Oberbegriff des Patentanspruchs 1 enthaltenden Kartenlesevorrichtungen wird in einem nicht unerheblichen Ausmaß von den Kartenträgerteilen derselben bestimmt.

Der vorliegenden Erfindung liegt daher die Aufgabe zugrunde, das Kartenträgerteil gemäß dem Oberbegriff des Patentanspruchs 1 derart weiterzubilden, daß dieses den Aufbau von weiter miniaturisierten, aber nichtdestotrotz einfach zu bedienenden und zuverlässig arbeitenden Kartenlesevorrichtungen ermöglicht.

Diese Aufgabe wird erfindungsgemäß durch das im kennzeichnenden Teil des Patentanspruchs 1 beanspruchte Merkmal gelöst.

Demnach ist vorgesehen, daß das Kartenträgerteil derart ausgebildet ist, daß es auf einen Randabschnitt der Karte unter Einklemmen desselben aufsteckbar ist.

Die Ausbildung des Kartenträgerteils in einer Art und Weise, daß dieses die von ihm zu haltende bzw. zu tragende Karte nur am Rand gehalten wird, ermöglicht es, die räumliche Ausdehnung des Kartenträgerteils im wesentlichen auf diesen Randbereich zu beschränken. Das Halten der Karte nur in einem Randabschnitt derselben läßt sich durch eine Klemmverbindung so gut und zuverlässig bewerkstelligen, daß auf das Vorsehen von zusätzlichen Auflageflächen und Halteelementen verzichtet werden kann.

Wählt man als mit dem Kartenträgerteil zu verklemmenden Kartenabschnitt das bezüglich der Richtung, längs welcher die Karte relativ zum Kontaktträgerteil zu bewegen ist, um in dieses eingeführt zu werden, hintere Ende der Karte, so können der Boden und die Seitenteile der bislang wie eine Schublade ausgebildeten Kartenträgerteile weggelassen werden. Dadurch kann der zum Einführen der Karte in das Kontaktträgerteil vorzusehende Schacht erheblich verkleinert werden, und zwar sowohl in der Höhe als auch in der Breite als auch in der Länge bzw. Tiefe.

Die Verkleinerbarkeit des zur Einführung der Karte in die Kartenlesevorrichtung vorgesehenen Schachtes ermöglicht in gleichem Maße eine Verkleinerung der ganzen Kartenlesevorrichtung.

Das erfindungsgemäße Kartenträgerteil kann darüber hinaus einen Verriegelungsmechanismus (zum Arretieren des Kartenträgerteils im in das Kontaktträgerteil eingeschobenen Zustand) und einen Auswurfmechanismus (zum zumindest teilweise Herausbefördern des Kartenträgerteils aus dem Kontaktträgerteil) enthalten und zudem wie ein Griff (zum Halten des Kartenträgerteils beim Einschieben und Herausziehen desselben in das bzw. aus dem Kontaktträgerteil) verwendet werden, wodurch sich die Handhabung des erfindungsgemäßen Kartenträgerteils trotz dessen verringerter Größe als elegant und einfach gestaltet.

Unabhängig davon kann das erfindungsgemäße Kartenträgerteil so bemessen und geformt sein, daß es den im Kontaktträgerteil vorgesehenen Schacht vollständig abdeckt (von außen her verschließt) und sich wie ein zum Gehäuse der Kartenlesevorrichtung gehörendes Teil in dieses einfügt (bündig mit diesem abschließt), wodurch es einerseits eine Schutzfunktion für die Kartenlesevorrichtung übernehmen und andererseits zur ästhetisch ansprechenden Gestaltung des gesamten Kartenlesevorrichtung beitragen kann.

Zusammenfassend kann festgestellt werden, daß das erfindungsgemäße Kartenträgerteil den Aufbau von denkbar kleinen, aber nichtdestotrotz einfach zu bedienenden und zuverlässig arbeitenden Kartenlesevorrichtungen ermöglicht.

Vorteilhafte Weiterbildungen der Erfindung sind Gegenstand der Unteransprüche.

Die Erfindung wird nachfolgend anhand von Ausführungsbeispielen unter Bezugnahme auf die Zeichnung näher erläutert. Es zeigen
- Figur 1A: eine Draufsicht auf eine MM-Karte,
- Figur 1B: eine Seitenansicht der MM-Karte,
- Figur 2: eine Draufsicht auf ein zum Halten bzw. Tragen der MM-Karte gemäß Figur 1 ausgelegtes Kartenträgerteil,
- Figur 3A: eine Draufsicht auf das Kartenträgerteil gemäß Figur 2 in einem die MM-Karte gemäß Figur 1 haltenden bzw. tragenden Zustand,
- Figur 3B: eine Seitenansicht auf das Kartenträgerteil gemäß Figur 2 in einem die MM-Karte gemäß Figur 1 haltenden bzw. tragenden Zustand,
- Figur 4A: das die MM-Karte gemäß Figur 1 tragende Kartenträgerteil gemäß Figur 2 in einem in ein Kontaktträgerteil eingeschobenen und mit diesem verrasteten Zustand,
- Figur 4B: eine Darstellung zur Veranschaulichung des Lösens der Verrastung zwischen dem Kartenträgerteil und dem Kontaktträgerteil,
- Figur 4C: eine Darstellung zur Veranschaulichung des Herausziehens des Kartenträgerteils aus dem Kontaktträgerteil,
- Figur 5: eine Schnittansicht durch zwei übereinander angeordnete Kontaktträgerteile, und
- Figur 6: eine Draufsicht auf das untere der in der Figur 5 gezeigten Kontaktträgerteile.

Die im folgenden beschriebene Kartenlesevorrichtung ist eine zum Lesen von MM-Karten ausgelegte Kartenlesevorrichtung. Dies bedeutet jedoch nicht, daß die Erfindung auf hierfür ausgelegte Kartenlesevorrichtungen beschränkt ist; die Erfindung ist auch bei Kartenlesevorrichtungen einsetzbar, die zum Lesen beliebiger anderer Karten (beispielsweise "normaler" Chipkarten, SIM-Karten und dergleichen) ausgelegt sind, wobei die Karten nicht nur eine beliebige Funktion, sondern auch beliebige Abmessungen haben können.

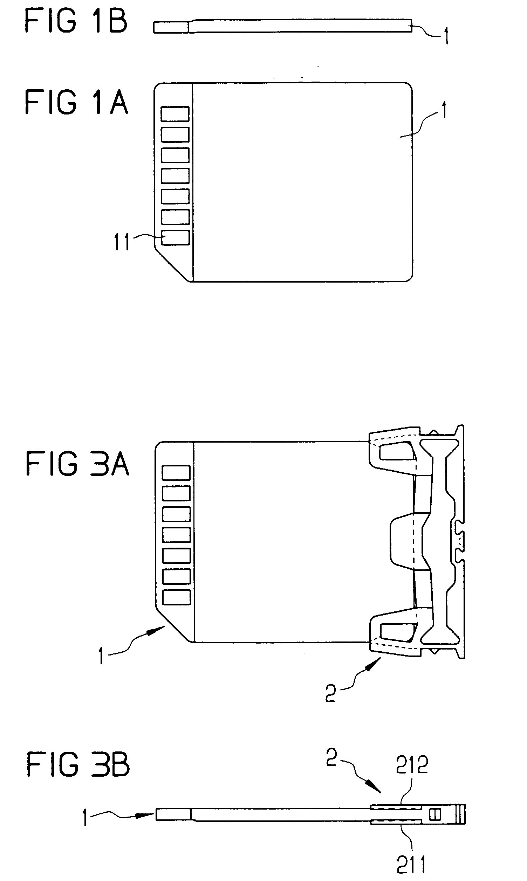

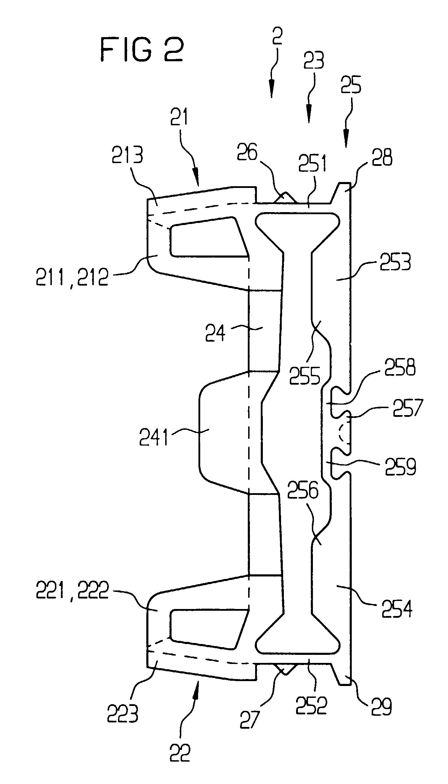

Eine MM-Karte, zu deren Lesen die nachfolgend näher beschriebene Kartenlesevorrichtung ausgelegt ist, ist in der Figur 1A in der Draufsicht und in der Figur 1B in einer Seitenansicht gezeigt. Wie aus den genannten Figuren ersichtlich ist, weist die dort dargestellte MM-Karte 1 an ihrer Oberfläche Kontaktflächen in Form von Oberflächenkontakten 11 auf. Diese Oberflächenkontakte 11 der MM-Karte 1 müssen durch die Kartenlesevorrichtung kontaktiert werden.

Die im vorliegenden Ausführungsbeispiel betrachtete MM-Karte 1 weist eine Länge von 32 mm, eine Breite von 24 mm und eine Dicke zwischen 1,3 und 1,4 mm auf.

Die zur Kontaktierung der Oberflächenkontakte 11 der MM-Karte 1 erforderlichen Kontaktelemente der Kartenlesevorrichtung sind in deren (später noch genauer beschriebenen) Kontaktträgerteil untergebracht.

Das Kontaktträgerteil weist im vorliegend betrachteten Ausführungsbeispiel der Kartenlesevorrichtung einen Schacht auf über welchen die zu lesende MM-Karte 1 zusammen mit einem diese tragenden bzw. haltenden Kartenträgerteil von der Seite der Kartenlesevorrichtung her einführbar, genauer gesagt einschiebbar ist.

Das besagte Kartenträgerteil ist in der Figur 2 gezeigt und dort mit dem Bezugszeichen 2 bezeichnet. Es ist, wie noch genauer erläutert werden wird, dazu ausgelegt, auf das gemäß der Richtung, längs welcher die Karte relativ zum Kontaktträgerteil zu bewegen ist, um in dieses bestimmungsgemäß eingeschoben zu werden, hintere Kartenende aufgesteckt zu werden.

Das Kartenträgerteil 2 setzt sich aus einem ersten Halte- und Führungsarm 21, einem zweiten Halte- und Führungsarm 22, und einem diese verbindenden Verbindungsstück 23 zusammen und weist eine im wesentlichen U-förmige Gestalt auf, wobei die Halte- und Führungsarme 21, 22 die Schenkel des U bilden.

Im (in den Figuren 3A und 3B gezeigten) bestimmungsgemäß zusammengesteckten Zustand der MM-Karte 1 und des Kartenträgerteils 2 ist die MM-Karte 1 zwischen die Halte- und Führungsarmen 21, 22 und bügel- und zungenartige Elemente der Halte- und Führungsarme 21, 22 und des Verbindungsstücks 23 eingesteckt und wird durch diese verklemmt und/oder lagemäßig justiert und gesichert. Der Aufbau, die Funktion und die Wirkungsweise der einzelnen Kartenträgerbestandteile wird nachfolgend im einzelnen erläutert.

Die Halte- und Führungsarme 21, 22 dienen, wie teilweise soeben erwähnt wurde und wie die Bezeichnung schon andeutet, zum Halten bzw. Einklemmen der zu lesenden Karte und zum Führen des Kartenträgerteils 2 innerhalb des Kontaktträgerteils.

Die Haltefunktion können die Halte- und Führungsarme 21, 22 unter anderem dadurch ausüben, daß sie nicht genau parallel zueinander verlaufen, sondern geringfügig aufeinander zulaufen, wobei sich der gegenseitige Abstand zu deren freien Endabschnitten hin verringert. In der in der Figur 2 gezeigten (entspannten) Ruhelage ist der Abstand zwischen den Halte- und Führungsarmen 21, 22 zumindest an deren freien Endabschnitten geringer als die entsprechenden Abmessungen der MM-Karte 1 im bestimmungsgemäß mit dem Kartenträgerteil 2 verbundenen Zustand. Beim Aufstecken des Kartenträgerteils 2 auf die MM-Karte 1 bzw. beim Einstecken derselben in das Kartenträgerteil werden die Halte- und Führungsarme 21, 22 elastisch auseinandergespreizt, wodurch die MM-Karte 1 im Ergebnis dazwischen eingeklemmt wird.

Zur Haltefunktion der Halte- und Führungsarme 21, 22 trägt ferner bei, daß von den einander zugewandten Seiten derselben jeweils zwei in einem ungefähr der Dicke der MM-Karte entsprechenden Abstand übereinander angeordnete, zum Verbindungsstück 23 verlaufende Laschen bzw. Bügel 211 und 212 bzw. 221 und 222 abgehen, zwischen welchen eine zu lesende MM-Karte 1 im mit dem Kartenträgerteil 2 zusammengesteckten Zustand zu liegen kommt. Die Bügel 211 und 212 bzw. 221 und 222 können dabei "nur" als ein den Bewegungsspielraum der MM-Karte begrenzender oberer und unterer Anschlag oder als die MM-Karte zwischen sich einklemmende Klemmelemente wirken.

Die Bügel 211 und 212 bzw. 221 und 222, genauer gesagt die durch diese geschaffene zusätzliche Verbindung zwischen den Halte- und Führungsarmen 21, 22 und dem Verbindungsstück 23 bewirken darüber hinaus eine Versteifung der Halte- und Führungsarme.

Die Führungsfunktion erlangen die Halte- und Führungsarme 21, 22 dadurch, daß sie an den voneinander abgewandten Seiten jeweils einen seitlich abstehenden Steg 213 bzw. 223 aufweisen, welcher beim Einschieben des Kartenträgerteils 2 in das Kontaktträgerteil in entsprechenden Nuten bzw. Führungsrillen desselben läuft.

Das die Halte- und Führungsarme 21, 22 miteinander verbindende Verbindungsstück 23 erfüllt zweierlei Funktionen: einerseits dient es als Anschlag und zusätzlicher Haltemechanismus für die MM-Karte 1, und andererseits wirkt es als Verriegelungsmechanismus zum Verriegeln des Kartenträgerteils 2 im Kontaktträgerteil sowie als Auswurfmechanismus zum Auswerfen des Kartenträgerteils 2 aus dem Kontaktträgerteil.

Die erstgenannte Funktion des Verbindungsstücks 23, nämlich dessen Funktion als Anschlag und zusätzlicher Haltemechanismus für die MM-Karte 1 wird durch eine Querstrebe 24 und zwei von dieser abgehende, in einem ungefähr der Dicke der MM-Karte entsprechenden Abstand übereinander angeordnete Zungen 241 erfüllt. Die Querstrebe 24 dient im bestimmungsgemäß mit dem Kartenträgerteil verbundenen Zustand der MM-Karte als Anschlag für dieselbe. Die Zungen 241 wirken ähnlich wie die Bügel 211 und 212 bzw. 221 und 222. D.h., sie umgreifen die MM-Karte 1 im mit dem Kartenträgerteil 2 zusammengesteckten Zustand und wirken dadurch als ein den Bewegungsspielraum der MM-Karte begrenzender oberer und unterer Anschlag oder als die MM-Karte zwischen sich einklemmende Klemmelemente.

Die zweite Funktion des Verbindungsstücks 23, nämlich dessen Funktion als Verriegelungsmechanismus zum Verriegeln des Kartenträgerteils 2 im Kontaktträgerteil sowie als Auswurfmechanismus zum Auswerfen des Kartenträgerteils 2 aus dem Kontaktträgerteil wird durch einen sich im wesentlichen parallel zur Querstrebe 24 erstreckenden Verriegelungs- und Auswurfabschnitt 25 erfüllt, welcher "nur" über zwei flexible Verbindungselemente 251 und 252 desselben mit der Querstrebe 24 verbunden und zusammen mit den Verbindungselementen 251 und 252 innerhalb gewisser Grenzen unabhängig von der starr ausgebildeten Querstrebe 24 elastisch verformbar (biegbar) ausgebildet ist.

Zur Verriegelung des Kartenträgerteils 2 im Kontaktträgerteil sind an den besagten Verbindungselementen 251 und 252, über die der Verriegelungs- und Auswurfabschnitt 25 mit der Querstrebe 24 verbunden ist, Rastelemente in Form von Rastnasen 26 und 27 vorgesehen, welche im bestimmungsgemäß mit dem Kontaktträgerteil zusammengesteckten Zustand des Kartenträgerteils 2 mit zugeordneten Rastelementen (Rastvertiefungen) des Kontaktträgerteils verrasten können.

Der Verriegelungs- und Auswurfabschnitt 25 umfaßt neben den bereits erwähnten Verbindungselementen 251 und 252 nebeneinander angeordnete Kipphebel 253 und 254 und einen zwischen diesen vorgesehenen Kipphebelbetätigungsabschnitt, wobei die Verbindungselemente 251 und 252 mit den voneinander abgewandten Enden der Kipphebel 253 und 254 verbunden sind.

Die Verbindungselemente 251 und 252 sind, wie vorstehend teilweise bereits erwähnt wurde, relativ dünn und stark elastisch verformbar; sofern das Kartenträgerteil 2 aus Kunststoff hergestellt ist, können die Verbindungselemente 251 und 252 als Filmscharniere ausgebildet sein.

Wie insbesondere aus der Figur 2 ersichtlich ist, weisen die Kipphebel 253 und 254 im betrachteten Beispiel an ihrer der Querstrebe 24 zugewandten Seite jeweils eine Verdickung 255 bzw. 256 auf. Diese Verdickungen 255 bzw. 256 verleihen dem jeweiligen Kipphebel einerseits die erforderliche Stabilität (Unverformbarkeit), um als Hebel wirken zu können, und dienen andererseits jeweils als ein Abstützelement, um welches sich der betreffende Kipphebel im an einen ortsfesten Punkt (vorzugsweise des Kontaktträgerteils oder des die Kartenlesevorrichtung enthaltenden Gerätes) anschlagenden Zustand drehen kann.

Die einander zugewandten Enden der Kipphebel 253 und 254 sind über den vorstehend bereits erwähnten Kipphebelbetätigungsabschnitt miteinander verbunden (elastisch aneinander gekoppelt).

Der Kipphebelbetätigungsabschnitt besteht aus einem in etwa mittig angeordneten Druckkraftansatzabschnitt 257 und zwei elastisch verformbaren (biegbaren) Verbindungselementen 258 und 259.

Der Druckkraftansatzabschnitt 257 ist ein starr, d.h. im wesentlichen unverformbar ausgebildeter Abschnitt des Verriegelungs- und Auswurfabschnittes 25. Die Ausübung eines Drucks auf den Druckkraftansatzabschnitt 257 hat, wie noch im einzelnen beschrieben werden wird, ein Lösen der Rastverbindung zwischen dem Kartenträgerteil 2 und dem Kontaktträgerteil und ein teilweises Herausschieben des Kartenträgerteils 2 und der von diesem gehaltenen MM-Karte 1 aus dem Kontaktträgerteil zur Folge. Der Druckkraftansatzabschnitt 257 weist im betrachteten Beispiel an einer zentralen Stelle eine in etwa halbkugelförmige Vertiefung auf, welche das Aufbringen der erforderlichen Druckkraft auf den Druckkraftansatzabschnitt 257 durch Ansetzen und Eindrücken eines Stiftes wie beispielsweise eines Kugelschreibers gestattet.

Der Druckkraftansatzabschnitt 257 ist über die Verbindungselemente 258 bzw. 259 mit den einander zugewandten Enden der Kipphebel 253 bzw. 254 verbunden.

Die Verbindungselemente 258 und 259 sind elastisch verformbar (biegbar) ausgebildete Abschnitte des Verriegelungs- und Auswurfabschnitts 25. Sofern der Verriegelungs- und Auswurfabschnitt 25 aus Kunststoff gefertigt ist, können die Verbindungselemente 258 und 259 als Filmscharniere ausgebildet sein.

Das wie beschrieben ausgebildete Kartenträgerteil 2 kann auf die zu lesende MM-Karte 1 aufgesteckt werden bzw. die MM-Karte 1 kann in das Kartenträgerteil eingesteckt werden.

Im bestimmungsgemäß zusammengesteckten Zustand kommt ein Randabschnitt der MM-Karte 1, genauer gesagt das hintere Kartenende zwischen den Halte- und Führungsarmen 21 und 22, zwischen den übereinander liegenden Bügeln 211 und 212 des ersten Halte- und Führungsarms 21, zwischen den übereinander liegenden Bügeln 221 und 222 des zweiten Halte- und Führungsarms 22, und zwischen den übereinander liegenden Zungen 241 der Querstrebe 24 zu liegen und wird zwischen diesen eingeklemmt und/oder gegen ein Verlassen der bestimmungsgemäßen Lage gesichert.

Der Zustand, in welchem die MM-Karte 1 und das Kartenträgerteil 2 wie beschrieben zusammengesteckt sind, ist in Figur 3A in der Draufsicht und in der Figur 3B in der Seitenansicht gezeigt.

Das derart mit der zu lesenden MM-Karte 1 verbundene Kartenträgerteil 2 kann zusammen mit der von dieser gehaltenen bzw. getragenen MM-Karte in das Kontaktträgerteil der Kartenlesevorrichtung, genauer gesagt in einen dafür vorgesehenen Schacht derselben eingesteckt werden.

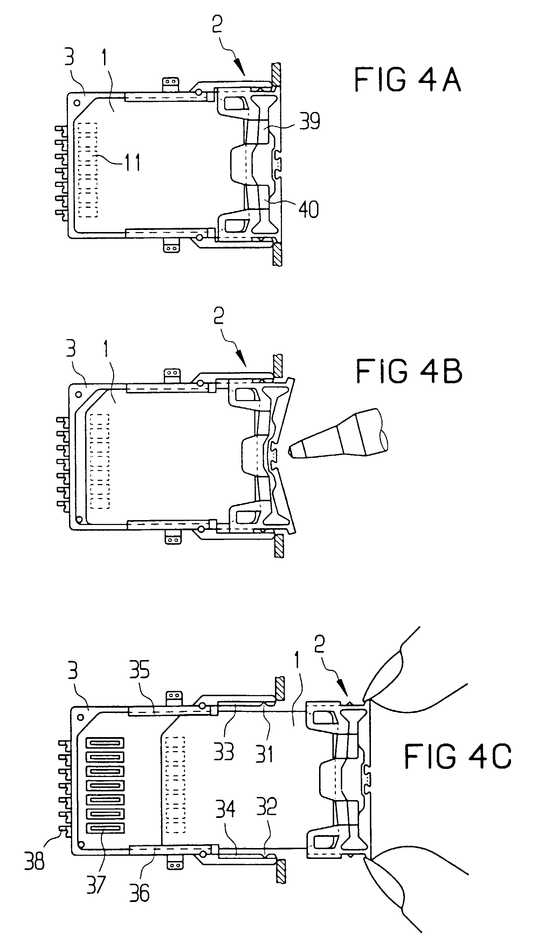

Der Zustand, in welchem dies geschehen ist, ist in der Figur 4A veranschaulicht; das Kontaktträgerteil ist dort mit dem Bezugszeichen 3 bezeichnet.

Im wie in der Figur 4A gezeigt in das Kontaktträgerteil 3 eingeschobenen Zustand des Kartenträgerteils 2 sind die Rastnasen 26 und 27 des Kartenträgerteils 2 in entsprechende Rastvertiefungen 31 und 32 des Kontaktträgerteils 3 (siehe Figur 4C) eingeschnappt und sichern dadurch das Kartenträgerteil 2 gegen ein unbeabsichtigtes Herausziehen aus dem Kontaktträgerteil 3.

Im Bereich der Rastvertiefungen 31 und 32 sind in Längsrichtung des Kontaktträgerteils 3 verlaufende Nuten bzw. Führungsrillen 33 bzw. 34 (siehe Figur 4C) ausgebildet, in welchen die Stege 213 und 223 des Kartenträgerteils 2 laufen können. Eine derartiger Führungsmechanismus erleichtert das bestimmungsgemäße Einschieben des Kartenträgerteils 2 in das Kontaktträgerteil 3 und schränkt zusätzlich den Bewegungsspielraum des Kartenträgerteils 2 innerhalb des Kontaktträgerteils 3 ein.

Entsprechendes gilt für weiter innen im Schacht des Kontaktträgerteils 3 vorgesehene, ebenfalls seitlich angeordnete und in Längsrichtung verlaufende Nuten bzw. Führungsrillen 35 und 36, in welchen die zu lesende MM-Karte 1 läuft und geführt wird.

Im wie in der Figur 4A dargestellten, bis zur bestimmungsgemäßen Endstellung in das Kontaktträgerteil 3 eingeschobenen Zustand des Kartenträgerteils 2 ist dieses in allen Richtungen gegen ein Verlassen dieser Stellung gesichert.

In diesem Zustand kommen die Oberflächenkontakte 11 der MM-Karte 1 mit entsprechenden Kontaktelementen 37 des Kontaktträgerteils 3 in Kontakt.

Die Kontaktelemente 37 stehen mit Lötfahnen 38 in Verbindung, über welche sie mit zugeordneten Anschlüssen einer in den Figuren nicht gezeigten, unter anderem auch als Träger für die Kartenlesevorrichtung dienenden Leiterplatte verbindbar (verlötbar) sind.

Im in der Figur 4A gezeigten Zustand schlagen die Kipphebel 253 und 254, genauer gesagt insbesondere deren Verdickungen 255 und 256 an Vorsprünge 39 und 40 des Kontaktträgerteils 3 an; sie übernehmen die Funktion der vorstehend bereits erwähnten ortsfesten Punkte, um welche sich die Kipphebel 253 und 254 beim Entfernen (Auswerfen) des im Kontaktträgerteil 3 arretierten Kartenträgerteils 2 drehen müssen. Das Auswerfen des Kartenträgerteils 2 mit der von diesem gehaltenen MM-Karte 1 wird später noch im Detail beschrieben.

Wenn und so lange das Kartenträgerteil 2 in das Kontaktträgerteil 3 vollständig eingesteckt ist, ist der hierfür im Kontaktträgerteil 3 vorgesehene Schacht durch das entsprechend geformte Kartenträgerteil 2 von der Außenseite her komplett und bündig mit der Gehäuseaußenseite verschlossen. Dies erweist sich in zweifacher Hinsicht als vorteilhaft: Einerseits ist das Innere des Kontaktträgerteils vor Verschmutzungen und Beschädigungen geschützt, und andererseits kann dem das Kontaktträgerteil enthaltenden Gerät bzw. dessen Gehäuse ein ansprechendes (ästhetisches) Äußeres verliehen werden.

Soll das Kartenträgerteil 2 zusammen mit der dadurch gehaltenen MM-Karte 1 aus dem Kontaktträgerteil 3 entfernt werden, so bedarf es hierzu der Betätigung des von außen zugänglichen, im Verriegelungs- und Auswurfabschnitt 25 untergebrachten Auswurfmechanismus, dessen Funktion und Wirkungsweise nachfolgend anhand der Figuren 4B und 4C näher beschrieben wird.

Die Betätigung des Auswurfmechanismus erfolgt dadurch, daß auf den (von außen zugänglichen) Druckkraftansatzabschnitt 257 eine Druckkraft ausgeübt wird. Dies kann, wie vorstehend bereits erwähnt wurde, beispielsweise durch Eindrücken eines Kugelschreibers oder dergleichen in die halbkugelförmige Vertiefung des Druckkraftansatzabschnittes 257 bewerkstelligt werden und ist in Figur 4B schematisch dargestellt.

Durch das Ausüben einer Druckkraft auf den Druckkraftansatzabschnitt 257 verläßt der Verriegelungs- und Auswurfabschnitt 25 des Kartenträgerteils 2 seine in der Figur 4A gezeigte Ruhe- bzw. Ausgangsstellung und wird im Ergebnis wie in Figur 4B gezeigt verformt. Damit einhergehend erfolgt eine Lösung der Verriegelung (Trennung der verrasteten Rastelemente) und ein teilweises Herausziehen des Kartenträgerteils 2 aus dem Kontaktträgerteil 3. Der sich dabei einstellende Zustand ist in Figur 4B veranschaulicht. Die in der Figur 4B gezeigte Verformung des Verriegelungs- und Auswurfabschnittes 25 bleibt nur aufrechterhalten, so lange eine Druckkraft auf den Druckkraftansatzabschnitt 257 ausgeübt wird. Wird die auf den Druckkraftansatzabschnitt 257 wirkende Druckkraft zurückgenommen, kehrt der Verriegelungs- und Auswurfabschnitt 25 des Kartenträgerteils 2 in seine Ausgangs- bzw. Ruhestellung zurück. Das Kartenträgerteil 2 behält dabei jedoch die aus dem Kontaktträgerteil 3 teilweise herausgezogene Stellung bei und kann von hier aus unter Anpacken an seitlichen Flügeln 28 und 29 manuell vollständig aus dem Kontaktträgerteil herausgezogen werden. Dies ist in Figur 4C veranschaulicht.

Das wie beschrieben wirkende Ausüben einer Druckkraft auf den Druckkraftansatzabschnitt 257 löst im Verriegelungs- und Auswurfabschnitt 25 im einzelnen die folgenden Vorgänge aus:

Durch die Druckkraft auf den Druckkraftansatzabschnitt 257 wird dieser in Richtung der wirkenden Druckkraft, d.h. zur Querstrebe 24 hin verschoben. Die elastisch biegbaren Verbindungselemente 258 und 259 folgen der Bewegung des Druckkraftansatzabschnittes 257 und ziehen dabei an den Kipphebeln 253 und 254, mit welchen sie verbunden sind. Das Ziehen an den einander zugewandten Enden der Kipphebel bewirkt, daß diese sich um die an den Vorsprüngen 39 und 40 des Kontaktträgerteils 3 anschlagenden Verdickungen 255 und 256 in einander entgegengesetzte Richtungen drehen. Dies wiederum hat zur Folge, daß auf die Verbindungselemente 251 und 252 eine Zug- und Biegekraft wirkt. Dadurch kommen die ursprünglich miteinander verrasteten Rastelemente 26 und 31 sowie 27 und 32 außer Eingriff, und mehr oder weniger gleichzeitig wird das Kartenträgerteil 2 ein Stück aus dem Kontaktträgerteil 1 herausgezogen.

Nimmt man in diesem Zustand die auf den Druckkraftansatzabschnitt 257 wirkende Druckkraft zurück, so entspannt sich zwar der elastisch deformierte Verriegelungs und Auswurfabschnitt 25, doch steht nun das gesamte Kartenträgerteil 2 so weit aus dem die beschriebene Kartenlesevorrichtung enthaltenden Gerät heraus, daß es durch Greifen des herausstehenden Teils, d.h. durch Greifen der Flügel 28 und 29 manuell vollständig aus dem Kontaktträgerteil 1 herausgezogen werden kann.

Der beschriebene Auswurfmechanismus ist, obgleich er unter Vorsehen einer minimalen Anzahl von separaten Einzelteilen, ja sogar einteilig als kompakter Mechanismus realisierbar ist, einfach in der Bedienung und zuverlässig in der Funktion.

Bei dem beschriebenen Auswurfmechanismus kommen zwei nebeneinander angeordnete Kipphebel zum Einsatz. Wenngleich dies derzeit nicht zuletzt wegen der besonderen Zuverlässigkeit im praktischen Gebrauch und der einfachen Herstellbarkeit als die vorteilhafteste Ausführungsform erscheinen mag, so besteht hierauf gleichwohl keine Einschränkung; es ist vielmehr eine Vielzahl von Abwandlungen denkbar. So kann beispielsweise auch in Betracht gezogen werden, nur einen einzigen Kipphebel vorzusehen und/oder anstatt der verwendeten Kipphebel andersartige Hebel zu verwenden.

Trotz der vielfältigen Funktionen des Kartenträgerteils 2 ist dieses durch seine Aufsteckbarkeit auf den hinteren Kartenrand sehr klein und kompakt ausgebildet. Insbesondere können der Boden und die Seitenteile der bislang wie eine Schublade ausgebildeten Kartenträgerteile weggelassen werden. Dadurch kann der zum Einführen der zu lesenden Karte im Kontaktträgerteil vorzusehende Schacht erheblich verkleinert werden, und zwar sowohl in der Höhe als auch in der Breite als auch in der Länge bzw. Tiefe. Dies wiederum ermöglicht eine Verkleinerung der gesamten Kartenlesevorrichtung.

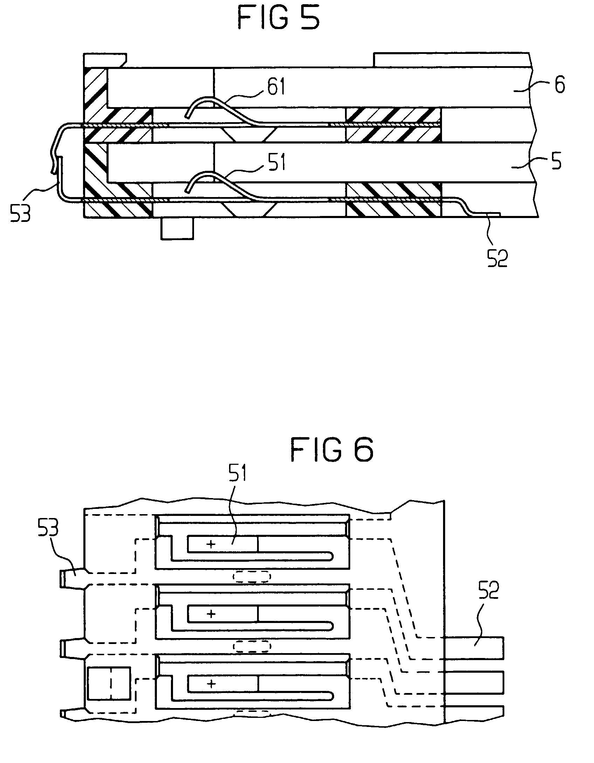

Von den erfindungsgemäßen Kartenlesevorrichtungen können auch mehrere übereinander gesetzt werden. Ein praktisches Beispiel ist in Figur 5 dargestellt.

Gemäß der Darstellung in der Figur 5 sind eine erste (untere) Kartenlesevorrichtung 5 und eine zweite (obere) Kartenlesevorrichtung 6, genauer gesagt die Kontaktträgerteile derselben übereinander angeordnet.

Die Kartenlesevorrichtungen weisen Kontaktelemente 51 bzw. 61 auf, die mit den Oberflächenkontakten 11 der jeweils zu lesenden MM-Karten in Kontakt bringbar sind. Die besagten Kontaktelemente gehen in leitende Strukturen über, welche mit Lötfahnen 52 und/oder Kartenlesevorrichtungs-Verbindungselementen 53 und 62 abschließen.

Die Lötfahnen 52 sind zum Anlöten an entsprechende Verbindungsstellen einer in den Figuren nicht gezeigten Leiterplatte vorgesehen; die Kartenlesevorrichtungs-Verbindungselemente 53 und 62 sind zur Verbindung (beispielsweise zur Parallelschaltung) von übereinander angeordneten Kartenlesevorrichtungen vorgesehen.

Die gemäß der Darstellung in der Figur 5 untere Kartenlesevorrichtung 5 weist sowohl Lötfahnen 52 als auch Kartenlesevorrichtungs-Verbindungselemente 53 auf; die gemäß der Darstellung in der Figur 5 obere Kartenlesevorrichtung 6 weist nur Kartenlesevorrichtungs-Verbindungselemente 62 auf.

Die Kartenlesevorrichtungs-Verbindungselemente 53 und 62 kommen im übereinandergesetzten Zustand der Kartenlesevorrichtungen 5 und 6 wie in der Figur 5 gezeigt in Kontakt. Sie können in der gezeigten Stellung verlötet, verschweißt oder auf sonstige Art und Weise verbunden werden.

Die Kontaktelemente, die Lötfahnen, die Kartenlesevorrichtungs-Verbindungselemente und die diese untereinander verbindenden Strukturen der jeweiligen Kartenlesevorrichtungen sind im Gehäuse der jeweiligen Kartenlesevorrichtung integriert. D.h., die Gehäuse werden unter Umspritzen der genannten Teile gefertigt und können dadurch besonders klein ausgebildet werden.

Die genannten (teilweise umspritzten und dort gestrichelt dargestellten) leitenden Strukturen einschließlich der Kontaktelemente 51, der Lötfahnen 52 und der Kartenlesevorrichtungs-Verbindungselemente 53 der gemäß der Figur 5 unteren Kartenlesevorrichtung sind in Figur 6 in der Draufsicht gezeigt.

Zusammenfassend kann festgestellt werden, daß insbesondere aufgrund der Miniaturisierung des Kartenträgerteils, aber auch aus anderen Gründen die Möglichkeit geschaffen wurde, Kartenlesevorrichtungen zu bauen, deren Größe bei ansonsten gleichbleibend guter und zuverlässiger oder gar verbesserter Funktion auf ein Minimum reduziert ist.

## Patentansprüche

1. Kartenträgerteil, welches zusammen mit einer zu lesenden Karte (1) in ein Kontaktträgerteil (3) einer Kartenlesevorrichtung einführbar ist,
**dadurch gekennzeichnet**,
daß das Kartenträgerteil (2) derart ausgebildet ist, daß es auf einen Randabschnitt der Karte unter Einklemmen desselben aufsteckbar ist.

2. Kartenträgerteil nach Anspruch 1,
**dadurch gekennzeichnet**,
daß das Kartenträgerteil (2) im wesentlichen die Form eines U aufweist, wobei die Schenkel des U durch zwei Halte- und Führungsarme (21, 22) gebildet werden, und wobei das die Schenkel verbindende Element durch ein Verbindungsstück (23) gebildet wird.

3. Kartenträgerteil nach Anspruch 2,
**dadurch gekennzeichnet**,
daß die Halte- und Führungsarme (21, 22) im entspannten Ruhezustand aufeinander zulaufen, durch ein Dazwischenschieben der zu lesenden Karte (1) aber elastisch auseinanderdrückbar sind.

4. Kartenträgerteil nach Anspruch 2 oder 3,
**dadurch gekennzeichnet**,
daß von den einander zugewandten Seiten der Halte- und Führungsarme (21, 22) jeweils zwei mit einem im wesentlichen der Kartendicke entsprechenden Abstand übereinander angeordnete, zum Verbindungsstück (13) verlaufende Bügel (211, 212; 221, 222) abgehen.

5. Kartenträgerteil nach einem der Ansprüche 2 bis 4,
**dadurch gekennzeichnet**,
daß vom Verbindungsstück (23) zwei mit einem im wesentlichen der Kartendicke entsprechenden Abstand übereinander liegende Zungen (241) abgehen.

6. Kartenträgerteil nach einem der Ansprüche 2 bis 5,
**dadurch gekennzeichnet**,
daß die voneinander abgewandten Seiten der Halte- und Führungsarme (21, 22) mit seitlichen Stegen (213, 223) versehen sind, welche derart ausgebildet und bemessen sind, daß sie beim Einschieben des Kartenträgerteils (2) in das Kontaktträgerteil (3) in dort vorgesehen Führungsrillen (33, 34) geführt werden.

7. Kartenträgerteil nach einem der vorhergehenden Ansprüche,
**dadurch gekennzeichnet**,
daß das Kartenträgerteil (2) mit Rastelementen (26, 27) versehen ist, welche im bestimmungsgemäß in das Kontaktträgerteil (3) eingeschobenen Zustand des Kartenträgerteils (2) mit zugeordneten Rastelementen (31, 32) des Kontaktträgerteils verrasten.

8. Kartenträgerteil nach einem der vorhergehenden Ansprüche,
**dadurch gekennzeichnet**,
daß im Kartenträgerteil (2) ein Auswurfmechanismus integriert ist, durch dessen Betätigung eine gegebenenfalls vorhandene Verriegelung zwischen dem Kartenträgerteil und dem Kontaktträgerteil (3) lösbar und das Kartenträgerteil zumindest teilweise aus dem Kartenträgerteil herausbeförderbar ist.
